Europäisches Patentamt

European Patent Office

Office européen des brevets

(19)

(11) **EP 0 623 894 B1**

(12) **EUROPEAN PATENT SPECIFICATION**

(45) Date of publication and mention
of the grant of the patent:
**12.04.2000 Bulletin 2000/15**

(51) Int. Cl.⁷: **G06K 13/067**, B65H 7/14,
G03G 15/00

(21) Application number: **94201239.4**

(22) Date of filing: **04.05.1994**

(54) **A detection system for detecting articles partly formed from a sheet or stacks of sheets and a method for detecting such articles**

Detektionssystem zur Detektion von Artikeln bestehend aus einem Blatt oder mehreren Blättern und Detektionsverfahren für solche Artikel

Un système de détection pour détecter des articles formés en partie de feuilles ou d'un nombre de feuilles et une méthode pour détecter ces articles

(84) Designated Contracting States:
**DE FR GB NL**

(30) Priority: **04.05.1993 NL 9300755**

(43) Date of publication of application:
**09.11.1994 Bulletin 1994/45**

(73) Proprietor: **Neopost B.V.**
**9201 BX Drachten (NL)**

(72) Inventors:
• **Drenth, Klaas**
**NL-9247 DN Ureterp (NL)**
• **Luinge, Johan**
**NL-8431 PG Oosterwolde (NL)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**GB-A- 2 067 285        US-A- 4 027 154**

• **IBM TECHNICAL DISCLOSURE BULLETIN,**
**vol.19, no.12, May 1977, NEW YORK, NY, USA**
**pages 4749 - 4750 W.A. BOOTHROYD 'Double**
**Document Detect System'**
• **IBM TECHNICAL DISCLOSURE BULLETIN,**
**vol.26, no.10A, March 1984, NEW YORK, NY, USA**
**pages 5171 - 5172 H.M. BEEBE, L. RICHARDS**
**'Detection of Multi-Paper Pages'**

**Description**

This invention relates to a detection system for detecting the presence of an article partly formed from a sheet or stacks of sheets in a detection area, comprising a transmitter unit for emitting electromagnetic waves into the detection area and a receiver unit for receiving electromagnetic waves emitted by the transmitter unit and for detecting a disturbance of these electromagnetic waves, caused by the article when the article is located in the detection area, wherein the system further comprises a control unit which controls the transmitter unit in such a manner that a received signal, which represents the received electromagnetic waves, generated by the receiver unit lies within specified limits, and wherein the receiver unit is designed for detecting the intensity or energy density of the received electromagnetic waves, whilst the control unit is designed for controlling the power or the intensity of the electromagnetic waves emitted by the transmitter unit

The invention also relates to a method for detecting the presence of an article partly formed from a sheet or stacks of sheets in a detection area, in which method electromagnetic waves are emitted into the detection area by means of a transmitter unit and the electromagnetic waves emitted by the transmitter unit are received by means of a receiver unit, whilst a disturbance of these electromagnetic waves, caused by the article, is detected when the article is located in the detection area, wherein the transmitter unit is controlled in such a way that a received signal, which represents the received electromagnetic waves, generated by the receiver unit lies within specified limits.

Such a system and method is known from the "IBM Technical Disclosure Bulletin", Vol. 19, No 12, May 1977.

These known detection systems are oftentimes used in mail handling and processing machines. Such machines are for instance suitable for automatically filling and closing envelopes. To that end, the machine is provided with a stack of envelopes and one or more stacks of sheets. These sheets may be made of paper but may also be made, for instance, of a different material, such as synthetic material. When hereinafter mention is made of a sheet of paper or stacks of sheets of paper, this is understood to include sheets or stacks of sheets of a different material. Also, a stack of sheets is understood to include a book, a leaflet, a calendar or any other article partly composed of sheets.

The machine takes a first envelope off the stack of envelopes and subsequently a sheet of paper off each stack of sheets of paper. The selected sheets are assembled to form a letter, folded and inserted into the envelope by the machine. The envelope is then closed and placed on a stack of envelopes which is now ready to be mailed.

A machine as described above comprises different transport paths along which mutually spaced envelopes, sheets of paper, or stacks of sheets of paper are transported. A stream of loose sheets of paper spaced along their path of transport is for instance formed by sheets of paper which are consecutively taken off a first stack of paper and are transported to a section of the machine where they are assembled with other sheets of paper to form a series of letters.

The stream of stacks of sheets of paper is for instance formed by different sheets of paper caused to overlay each other, assembled to form a series of letters to be mailed. These letters to be mailed are subsequently transported with a mutual interspace along a transport path to a section of the machine where the letters are folded and inserted in an envelope. Of course, the envelopes are transported to this section of the machine as well. The envelopes are also spaced apart along their route of transport in the machine, so that a small interspace is present between the envelopes. In this connection, an envelope can be regarded as a stack of sheets of paper.

Since the different paper streams in the machine have to be synchronized with each other, the machine comprises at different points along the transport paths the above-described detection means which register the presence, and thus also the absence, of a sheet of paper or a stack of sheets of paper in a detection area coinciding at least partly with the transport path. To that end, the sheet of paper or the stack of sheets of paper are passed between the spaced-apart transmitter unit and the receiver unit. To that end, the receiver unit may for instance be part of the transport path along which the paper is passed, whilst the transmitter unit is arranged above the transport path. The detection area then extends along a part of the transport path and between the transmitter and receiver units.

The effect of a single sheet of paper on the emitted electromagnetic waves is typically slight, so that the intensity of the received electromagnetic waves diminishes, for instance, by only 70 percent. Yet this should be recognized by the detection unit as being an article or sheet of paper that is located in the detection area.

A problem with the current detection systems is that the electrical dispersion or leakage between the transmitter and receiver units is fairly large. Such leakage may run up to a difference in efficiency of 400 percent between the transmitter and receiver units. Since the system must be capable of detecting a signal decrease of only 70 percent, this dispersion presents major problems. Only by using very accurate and therefore expensive electrical components can some resistance be offered to this problem. Also, any inaccuracy in the distance between the transmitter unit and the receiver unit introduces into the detection system an undesired spread or dispersion which increases quadratically with the distance.

Typically, the transmitter unit is provided with a LED for emitting light and the receiver unit is provided with a phototransistor for receiving light. This introduces an optical spread or dispersion into the detection system owing to any deviation in the optical axes of the LED and the phototransistor. Typically, this dispersion is a factor of two. Also, the non-linearity of a phototransistor makes a contribution of well over 50 percent to the dispersion.

As a consequence of the transport of paper in the machine, a fairly large amount of paper dust is introduced into the machine in the course of time. These dust particles settle on the LED and the phototransistor and, as a consequence, less light is detected by the receiver unit. As a result, a sheet of paper may be erroneously detected even when no paper is present in the detection area.

In addition, incident ambient light may have an adverse influence on the detection system. The "IBM technical disclosure bulletin Vol. 19, No. 12, May 1977" (D3) describes an apparatus, including a circuit for detecting a double feet error in a document transport mechanism. The current supply to an illuminating lamp is adjusted to keep the output of the cooperating photocell constant with respect to a reference voltage over a long time period.

A disadvantage of this known system is that it proves to lack accuracy. The electrical dispersion or leakage between the illuminating lamp and the cooperating photocell is fairly large. Such leakage may run up to a difference in efficiency of 400% between the lamp and the photocell.

The variation in the output of the photocell heavily depends on the variation of the current supplied to the lamp. This means that a slight variation in the current supplied to the lamp results in a large variation in the output of the photocell. Because according to D3 the output of the photocell is regulated to a reference voltage, the system according to D3 easily becomes unstable.

The object of the invention is to provide a solution to all of the above problems without the system becoming economically unattractive. To that end, the detection system is characterized, in accordance with the invention, in that the control unit comprises an A/D converter to which the received signals generated by the receiver unit are applied, a processor unit to which received signals sampled and digitized by the A/D converter are applied, and a D/A converter which converts digital control signals generated by the processor to analog control signals applied to the transmitter unit for controlling the transmitter unit, wherein the control unit increases the intensity or energy density of the emitted electromagnetic waves when, upon at least one measurement performed when no article is present in the detection area, the magnitude of the received signal or a quantity derived therefrom by the control unit lies below a second value and wherein the control unit reduces the intensity or energy density of the emitted electromagnetic waves when, upon at least one measurement performed when no article is present in the detection area, the magnitude of the received signal or a quantity derived therefrom by the control unit lies above a third value, with the third value being greater than the second value.

Because the received signal is kept within certain limits at al times, all of the above-mentioned dispersion phenomena are compensated, ensuring that a single sheet gives a minimum decrease of 70 percent.

Since the received signal in the case where no article is present is now within the optimum operating range of the detection system, an article entering the detection area can be properly detected, even if its entry gives a decrease of, for instance, only 70 percent.

A method according to the invention is characterized in that the intensity or energy density of the emitted electromagnetic waves is increased if, upon at least one measurement performed when no article is present in the detection area, the magnitude of the received signal or a quantity derived therefrom lies below a second value, whereas the intensity or energy density of the emitted electromagnetic waves is reduced if, upon at least one measurement performed when no article is present in the detection area, the magnitude of the received signal or a quantity derived therefrom lies above a third value, said third value being greater than said second value.

The invention will be further elucidated with reference to the drawings. In the drawings:

Fig. 1 shows a diagrammatic embodiment of a detection system according to the invention, used in a mail processing machine; and
Fig. 2 shows a particular embodiment of the detection system of Fig. 1.

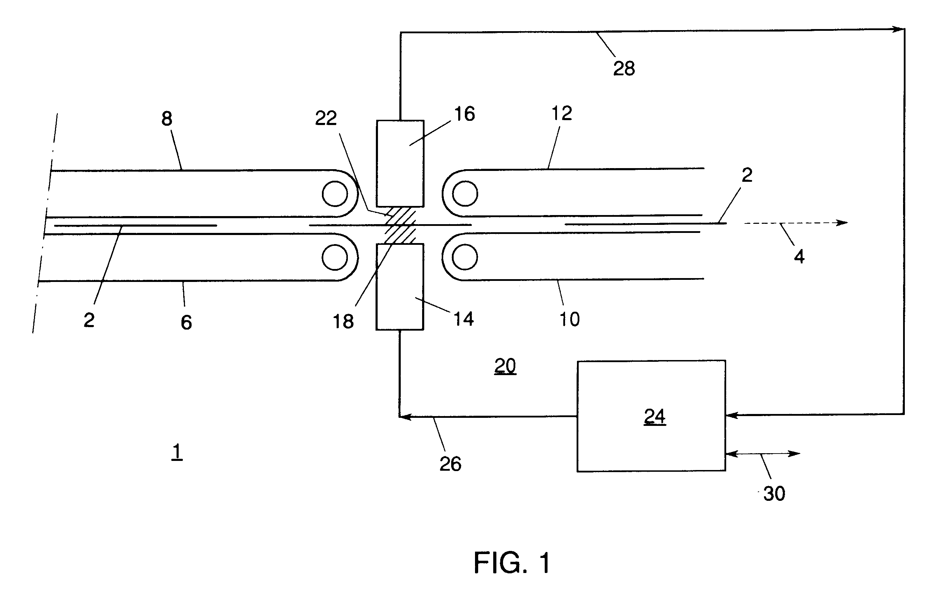

In Fig. 1 reference numeral 1 denotes a transport apparatus with which sheets of paper 2 are transported along a transport path 4 indicated by a dotted line in the drawing. It is noted that the term sheet of paper is understood to include a sheet of a different material, such as for instance a sheet of synthetic material. The transport apparatus 1 may for instance be part of a machine for processing mail to be dispatched. However, other uses are conceivable. The transport apparatus 1 comprises a first pair of two superposed conveyor belts 6, 8 with which the sheets of paper are transported. To that end, the sheets of paper are disposed between the conveyor belts 6 and 8. The conveyor belts are driven at the same speed, in such a manner that the sheets move from the left to the right.

In this case the conveyor belt 8 is suspended, through means not shown, for movement in vertical direction, such that a sheet of paper is clamped between the lower conveyor 6 and the upper conveyor 8. This also enables transportation of stacks of sheets of paper. In that case the conveyor 8 is moved up by the thicker stacks, so that sufficient space is present for the stacks of sheets of paper to be transported as well. As far as the principle of the invention is concerned, however, it makes no difference whether stacks or sheets of paper, loose sheets of paper or envelopes are transported.

The transport apparatus 1 further comprises a second pair of conveyor belts 10, 12 located at some distance from, but in line with, the first pair of conveyor belts 6, 8. The second pair of conveyor belts 10, 12, too, is driven in such a manner that sheets of paper 2 are transported from the left to the right, and the upper conveyor belt 12, too, is suspended, through means not shown, for movement in vertical direction.

The distance between the first pair of conveyor belts 6, 8 and the second pair of conveyor belts 10, 12 is less than the length of a sheet of paper, so that the second pair of conveyor belts 10, 12 grips a sheet of paper before this sheet of paper has entirely left the first pair of conveyor belts 6, 8.

Arranged between the lower conveyor belt 6 of the first pair and the lower conveyor belt 10 of the second pair is a transmitter unit 14. Similarly, a receiver unit 16 is arranged between the upper conveyor belt 8 of the first pair and the upper conveyor belt 12 of the second pair. The top surface 18 of the transmitter unit 14 is flat and is located at substantially the same height as the top sides of the lower conveyor belts 6 and 8.

The receiver unit 14 and the transmitter unit 16 are part of a detection system 20 which is suitable for detecting the presence of articles in a detection area, in this embodiment sheets of paper in a detection area 22. Fig. 1 diagrammatically depicts the detection area 22 in obliquely hatched representation.

The transmitter unit 14 emits electromagnetic waves into the detection area 22 and which are detected by the receiver unit 16.

The detection system further comprises a control unit 24 which controls the transmitter unit 14 through line 26. In this exemplary embodiment the control unit 24 regulates the power with which the transmitter unit 14 emits electromagnetic waves into the detection area 22. The frequency at which the emission occurs is strongly dependent on the article to be detected. In the case where relatively thin articles must be detected which readily transmit electromagnetic waves, and consequently absorb and/or reflect them only in part, electromagnetic waves of a high frequency are opted for, in particular light.

The control unit 24 is further connected with an output of the receiver unit 16 through line 28. The receiver unit 16 is sensitive to electromagnetic waves of a frequency equal to the frequency of the waves emitted by the transmitter unit 14. The signal applied by the receiver unit 16 to the control unit 24 through line 28 represents in this exemplary embodiment the intensity of the received electromagnetic waves.

It will be clear that the received signal may also represent other physical quantities, such as the energy density or the frequency spectrum of the received waves. As soon as a sheet of paper enters the detection area 22, the intensity of the received electromagnetic waves will decrease since the sheet of paper will reflect and/or absorb a part of the emitted electromagnetic waves and thus transmit only a part in the direction of the receiver unit 16. The control unit 24 will register the decrease in the intensity and, when conditions to be further described hereinafter have been met, indicate that a sheet of paper is located in the detection area. To that end, through line 30 the status 'paper in detection area' is passed to parts of the apparatus, not further described, for further processing. As soon as the sheet of paper leaves the detection area 22 again, the intensity of the received electromagnetic waves will increase again and the control unit 24, when conditions to be further described hereinafter have been met, will indicate on line 30 the status 'no paper in detection area'.

On the basis of this status information other paper processing parts of the apparatus can be synchronized with the paper stream along transport path 4. Also, by means of the detection device 20, sheets of paper can be counted.

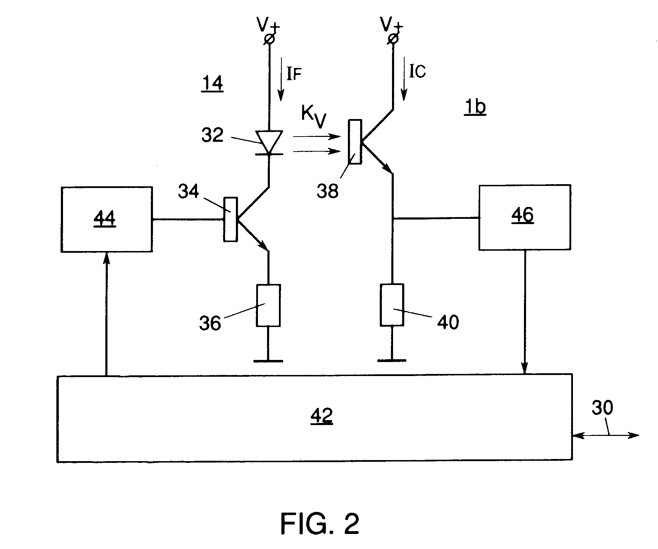

Fig. 2 shows a particular embodiment of the detection system 20 of Fig. 1. The transmitter 14 comprises a light-emitting diode (LED) 32, a transistor 34 and a resistor 36. The anode of the LED 32 is connected with a positive terminal $V^+$ of a power supply and the cathode is connected with the collector of the transistor 34. The emitter of the transistor 34 is grounded by way of resistor 36.

The receiver unit 16 comprises a phototransistor 38 and a resistor 40. The collector of the phototransistor 38 is connected with a positive supply terminal $V^+$ of the power supply and the emitter is grounded by way of resistor 40.

The control unit 24 comprises a processor unit 42, a D/A converter 44 and an A/D converter 46. The processor unit 42 generates digital signals which are applied to the D/A converter 44. These signals are converted by the D/A converter 44 to analog signals with which the base of transistor 34 is controlled. The A/D converter 46 measures the voltage on the emitter of phototransistor 38, samples and digitizes this measured voltage and applies the thus obtained digital signals to the processor unit 42 for further processing.

The operation of the detection system is generally as follows. The current If through the LED 32 is adjusted such that the collector current Ic of the phototransistor 38 lies within specified limits. These limits have been determined in such a manner that a change in the amount of incident light on the phototransistor results in a properly measurable change dIc in the current Ic. If the change dIc is slight because Ic has not been set within the specified limits, dIc is no longer accurately measurable. This is caused in particular by the amount of noise which is large with respect to dIf. The consequence is that sheets that cause only a slight change in the amount of incident light on the phototransistor will not be detected. There are many causes contributing to the situation where sheets are no longer detected.

The settlement of dust, more specifically paper dust, on the LED 32 and the phototransistor 38 leads to a decrease of the amount of light detected by the phototransistor 38. This is corrected by adjusting - in this case increasing - the current If of the LED 32 in such a manner that the current Ic through the phototransistor remains within the specified limits. Since the current Ic lies within the specified limits, a change in the amount of incident light as a result of a sheet entering the detection area will result in a properly detectable change in the current Ic.

Electrical dispersion or leakage between the transmitter unit 14 and the receiver unit 16 is also compensated completely. Such leakage may run up to a difference in efficiency of 400 percent between the transmitter unit and the receiver unit. By virtue of the above adjustment, relatively inexpensive elements with a large spread or dispersion can be used.

Also, an inaccuracy in the distance between the transmitter unit and the receiver unit introduces into the detection system an undesired spread or dispersion which increases quadratically with the distance and is likewise compensated by the adjustment of the current Ic. A deviation in the optical axis of the LED and the phototransistor, as well as the non-linearity of the phototransistor 38 are also corrected. Without correction these deviations can influence the current Ic through the phototransistor by more than a factor of 2. Moreover, the influence of incident ambient light is compensated inasmuch as the current Ic is accordingly adjusted so as to compensate the effect, so that changes in Ic as a result of changes in incident light on the phototransistor remain properly measurable. Moreover, temperature influences are also compensated, so that the detection system will continue to function properly at varying temperatures.

The current Ic is preferably set within the specified limits when no sheet is present in the detection area, since this always gurarantees optimum implementation of the adjustment. If Ic is set when a sheet is present in the detection area that gives only a slight decrease in the current Ic, the transistor will be properly set. However, if the sheet reflects or absorbs a major proportion of the incident light, so that, for instance, the amount of incident light decreases by more than 80 percent, the current Ic cannot be set within the specified limits at the time when the sheet is present in the detection area. If this is done nevertheless, the chances are that the current If increases to such an extent when the article leaves the detection area again that the current If ends up in an unfavorable part of the characteristic. In other words, a change in the incident light of, for instance, 70 percent, then results only in a very small change in the current Ic, which is not properly measurable.

In particular, the limits are determined in such a manner that the amount of incident light on the phototransistor 38 lies within the at least substantially linear part of its characteristic. This last is also to say that the characteristic is linear within given tolerances. By characteristic is meant the correlation between Ic and the amount of light, i.e. the energy density $(mW/cm^2)$ of the incident light on the phototransistor 38.

Hereinafter a possible dimensioning of the detection system of Fig. 2 will be given, which renders the system particularly suitable for the detection of sheets of paper. However, the dimensioning is only an example and in no way limits the invention.

The LED 32 is a PN junction GaAs infrared diode through which a maximum current If of 41 mA can flow at a maximum ambient temperature of 40°C. If the current is greater, there is a chance the LED will melt. The supply voltage $V^+$ is selected to be 5 v. Taking into account the threshold voltage of the LED 32, this means that the collector voltage of transistor 34 will be about 3.8 v. The saturation voltage of the transistor 34 is about 0.5 v, so that the emitter voltage will be about 3.3 v. The resistance 36 is then selected to be approximately equal to 3.3 v/41 mA, for instance 82 Ohm.

It has been experimentally ascertained that

$$Ic=If*Kv/d*d \qquad (1)$$

where Ic is the collector current of phototransistor 38, If is the current of LED 32, d is the distance between LED 32 and phototransistor 38 in cm, and Kv is a constant depending on the type of LED 32 and phototransistor 38. In the present exemplary embodiment, for Kv a value of 1.1 is taken.

In order to give the detection system the largest possible control range, the initial value of the current If is selected to be 10% of its maximum value. In this case, therefore, the initial value If=4.1 mA. This makes it possible to increase the current If by a factor of 10 to compensate, for instance, for settlement of dust on the optical system, i.e. paper dust particles or other dust particles settling on LED 32 and phototransistor 38.

Since the phototransistor 38 should work in its linear range, the voltage across the phototransistor should be as high as possible. Starting from the supply voltage of 5 v, the collector-emitter voltage of the phototransistor is in this case selected to be 4 v. This means that the emitter voltage of phototransistor 38 will be approximately 1 v. If the distance d equals 1 cm, it follows, in accordance with formula (1), that Ic is approximately equal to 4.5 mA. The magnitude of resistance 40 is therefore selected to be 1v/4.5 mA = 220 Ohm. The magnitude of Ic represents the magnitude of the intensity or energy density of the light received by the phototransistor 38. If the amount of light decreases, the current Ic will also decrease. As a result, the emitter voltage of the transistor 38 will decrease as well.

The emitter voltage is therefore also representative of the intensity or energy density of the amount of light received by the phototransistor.

The voltage on the basis of transistor 34 will have to be approximately 0.5 volts higher than the emitter voltage and thus takes the value of approximately 3.8 v. The maximum voltage Umax of the D/A converter is therefore set at 3.8 v. Umax may be set at 3.8 volt for instance by means of a known resistance divider. If D/A converter 44 is an 8-bit converter, a single step of the converter corresponds approximately with 41.1/256 mA.

The A/D converter 46 provides a digital signal which is a measure for the emitter voltage of transistor 38. This digital signal is supplied to the processor unit 42 for further processing.

The processor unit 42 will control the current If by way of D/A converter 44 and transistor 34, in such a manner that the collector voltage of the phototransistor 38 lies within a specified range.

In accordance with a particular embodiment, a distinction is made between setting and adjusting the current Ic. The current Ic is set before the paper stream is set in motion, since setting generally takes some time. Such setting can for instance be realized with successive approximation, so that the required LED current If can still be determined fairly quickly. Of course, other methods of setting the current Ic are also possible. In this case the current Ic is set by the processor unit 42 in such a manner that the emitter voltage Ue of transistor 38 lies just above and as closely as possible to a predetermined first value of 0.9 v. The emitter voltage concerned here is the emitter voltage in the absence of paper in the detection area. Given the type of phototransistor (for instance type SDP 8405), the current Ic will now be at least substantially directly proportional to the amount of received light.

Then the paper stream as described with reference to Fig. 1 will be started. In operation the processor unit 42 will also continue to monitor the magnitude of Uc when no paper is located in the detection area. It is required that Uc lie between a predetermined second and third value of 0.9 and 1.3 v, respectively. A fairly large range has been taken here, because in the case of sensitive combinations the variations in the current Ic can be large if current If varies. If Uc no longer lies between 0.9 and 1.3 v, the processor unit 42 will start to adjust the current If. Such adjustment is effected by increments of one step of the D/A converter at a time, i.e. by increments of 0.16 mA.

The adjustment itself can be effected in principally two ways, viz. 'during paper' and 'during no paper'. The measurement of Uc, however, occurs during no paper. If Uc is measured and if necessary is adjusted during the period where no paper is located in the detection area, i.e. between two sheets of paper, this has a drawback in that much time is required to carry out this process. First of all, it has to be ascertained by the processor unit 42 in a manner to be described hereinafter that no paper is located in the detection area. Then it has to be checked whether Uc is between 0.9 and 1.3 v, whereafter, if necessary, the current If has to be increased or reduced by 0.16 mA. Thereafter Uc has to be measured again and, if necessary, If has to be adjusted again if Uc is not yet within the desired limits. To create sufficient time for the above outlined measurement and control procedure, a large distance between successive sheets of paper will be necessary at a given transport speed.

A second, more advantageous way of adjusting Uc consists in determining the value of Uc again when no paper is present. If it appears that Uc has to be adjusted, this is done, however, right after a sheet of paper has been detected in the detection area. Thus the distance between successive sheets of paper can be further reduced. The measurement of Uc is repeated when once again there is no paper in the detection area, whereafter If, if necessary, is adjusted again by an increment of 0.16 mA as described above. The magnitude of an increment by which If is adjusted is so dimensioned that one increment corresponds with a change in Uc which is less than 1.3-0.9=0.4 v.

In accordance with an alternative embodiment, the average value Um of Uc is measured during the period when a gap between two successive sheets of paper is located in the detection area. The processor unit 42 sees whether Um lies inside or outside the range between the second and third values. Only when it has been ascertained a large number of times at successive gaps that Um lies below 0.9 v or above 1.3 v will If be increased or reduced by an increment of 0.16 mA.

It will be clear that the second and third values need not be predetermined values as described above, but may also be a function of, for instance, the distance d, the factor Kv and previously determined values of Uc.

The processor unit 42 detects a sheet of paper when Uc falls below a predetermined fourth value of 0.5 v. The processor unit 42 detects the status 'no paper' when the voltage Uc subsequently rises above a predetermined fifth value of 0.6 v. The system is therefore provided with a hysteresis.

The thinnest sheet of paper the detection system should still be able to detect reduces the amount of light received by the phototransistor 38, for instance, by only 70 percent. This means that such a sheet of paper can no longer be registered when the voltage Uc exceeds the value 1.66 v, since a 70 percent reduction of 1.66 v is 0.5 v and this does not fall below the fourth value of 0.5 v. If the value of Uc is greater than a sixth value of 1.5 v, the processor unit 42 accordingly generates an error message.

This situation may occur when suddenly much more light is being detected because dust has disappeared from the phototransistor 38. Previously, the phototransistor had gradually become dusty, with the result that the processor unit 42 constantly increased the current If to compensate for the dust which has fallen in. When suddenly, for instance through a gust of wind, a large part of the dust which has fallen in has disappeared, the voltage Uc will shoot up. This means that Uc will have to be adjusted again or set again as described hereinabove. This last may for instance be initiated by the user pressing a button when the processor unit 42 has reported the error message, for instance on a display.

The fourth, fifth, and sixth values, too, need not be predetermined. Thus, in an alternative embodiment the fourth and fifth values can be chosen on the basis of the average value Um of a plurality of Uc values previously determined in the absence of paper. The fourth value is then set to be equal to 0.66*Um by the processor unit and the fifth value is set to be equal to 0.75*Um by the processor unit 42. Similarly, the sixth value can be set to be equal to 2*Um. In particular, the fourth and fifth values can be selected to be equal to 0.66*Um, so that the hysteresis is canceled.

The processor unit 42 may, in accordance with an alternative embodiment, generate an error message 'dust fallen off' when the value Uc in the absence of paper has doubled compared with the preceding measured value of Uc in the absence of paper. In that case, too, it is preferred that the detection system be set again.

When in the course of time the processor unit 42 has increased the current If to, for instance, 80 percent of its maximum value, it will give a warning 'cleaning desired', for instance by way of a display (not shown). If the value of If has attained its maximum value, the processor unit 42 will give an error message 'too dusty'. A user can then proceed to clean the detection system. In both cases the power or the intensity of the emitted light has exceeded a predetermined value.

In an alternative embodiment, the warning 'cleaning desired' is generated when Uc falls below a predetermined seventh value. Similarly, the warning 'too dusty' is generated when the value of Uc falls below a predetermined eighth value, the eighth value being smaller than the seventh value.

The warning 'cleaning desired' will be canceled when Uc exceeds a predetermined ninth value, the ninth value being greater than the seventh value for obtaining a hysteresis. Similarly, the warning 'too dusty' will be canceled when Uc exceeds a predetermined tenth value, the tenth value being greater than the eighth value and less than the ninth value. Preferably, the ninth value is less than the fourth value.

The current Ic may after some time be lower than directly after switch-on because the phototransistor 38 will heat up slowly. In practice it has been found that the value of Uc may be 25 percent greater with a cold start. The voltage Uc upon detection of the thinnest sheet of paper (transmission 30 percent) will then be 0.3*1.25*1.3=0.49 v at a maximum. Because this is very close to the fourth value of 0.5 v, such a sheet of paper can hardly be detected. The control unit 42 compensates this thermal phenomenon by lowering the current If by a certain percentage in the case of a cold start.

It will be clear that the above values are all inverted when the supply terminal is -5 v, transistor 34 is replaced with a PNP transistor, phototransistor 38 is also replaced with a PNP phototransistor and the direction of LED 32 is reversed. The above-described relations between the second through the tenth values remain unchanged. Thus, for instance, the voltage Um will be adjusted between -1.3 v and -0.9 v, in other words, the magnitude of Um (absolute value of Um) will be adjusted between the second and third values of 0.9 and 1.3 v, respectively. In other words, the magnitude of the received signal, or in this case a derived magnitude -Um, is adjusted to between 0.9 and 1.3 v.

## Claims

1. A detection system (20) for detecting the presence of an article (2) partly formed from a sheet or stacks of sheets in a detection area (22), comprising a transmitter unit (14) for emitting electromagnetic waves into the detection area (22) and a receiver unit (16) for receiving electromagnetic waves emitted by the transmitter unit (14) and for detecting a disturbance of these electromagnetic waves, caused by the article (2) when the article is located in the detection area (22), wherein the system (20) further comprises a control unit (24) which controls the transmitter unit (14) in such a manner that a received signal, which represents the received electromagnetic waves, generated by the receiver unit (16) lies within specified limits, and wherein the receiver unit (16) is designed for detecting the intensity or energy density of the received electromagnetic waves, whilst the control unit (24) is designed for controlling the power or the intensity of the electromagnetic waves emitted by the transmitter unit (14), characterized in that the control unit (24) comprises an A/D converter (46) to which the received signals generated by the receiver unit are applied, a processor unit (42) to which received signals sampled and digitized by the A/D converter (46) are applied, and a D/A converter (44) which converts digital control signals generated by the processor (42) to analog control signals applied to the transmitter unit (14) for controlling the transmitter unit (14), wherein the control unit (24) increases the intensity or energy density of the emitted electromagnetic waves when, upon at least one measurement performed when no article (2) is present in the detection area (22), the magnitude of the received signal or a quantity derived therefrom by the control unit (24) lies below a second value and wherein the control unit (24) reduces the intensity or energy density of the emitted electromagnetic waves when, upon at least one measurement performed when no article is present in the detection area (22), the magnitude of the received signal or a quantity derived therefrom by the control unit (24) lies above a third value, with the third value being greater than the second value.

2. A detection system according to claim 1, characterized in that the received signal generated by the receiver unit (16) lies within said limits when no article (2) is located in the detection area (22).

3. A detection system according to claim 1 or 2, characterized in that said limits have been determined in such a manner that the magnitude of the received signal generated by the receiver unit (16) is at least substantially directly proportional to the intensity of the received electromagnetic waves.

4. A detection system according to any one of the preceding claims, characterized in that the transmitter unit (14) comprises means (32) for emitting light.

5. A detection system according to claim 4, characterized in that the transmitter unit (14) comprises a LED (32).

6. A detection system according to claim 4, characterized in that the receiver unit (16) comprises means (38) for receiving light.

7. A detection system according to claim 6, characterized in that the receiver unit (16) comprises a phototransistor (38) or photodiode.

8. A detection system according to claims 3 and 7, characterized in that the magnitude of the current through the phototransistor (38) is at least substantially directly proportional to the intensity of the light received by the phototransistor (38).

9. A detection system according to claim 5, characterized in that the control unit (24) controls the magnitude of the current through the LED (32) for regulating the intensity of the emitted light.

10. A detection system according to any preceding the claims, characterized in that the control unit (24), during an initialization of the detection system, when no article is located in the detection area (22), sets the intensity or the power of the emitted electromagnetic waves in such a manner that the magnitude of the received signal is at least substantially equal to a predetermined first value.

11. A detection system according to any preceding claim, characterized in that the control unit (24) increases or reduces the intensity or energy density of the emitted electromagnetic waves by a predetermined value and repeats this until the magnitude of the received signal or a quantity derived therefrom by the control unit (24) lies between the second and third values.

12. A detection system according to any preceding claim, characterized in that the control unit (24) detects an article in the detection area (22) when the magnitude of the received signal falls below a fourth value as a result of the decrease in the intensity or energy density of the received electromagnetic waves owing to the presence of the article (2) in the detection area (22).

13. A detection system according to claim 12, characterized in that the control unit (24) indicates that an article (2) is no longer located in the detection area (22) when the magnitude of the received signal exceeds a fifth value as a result of the increase in the intensity or energy density of the received electromagnetic waves owing to the disappearance of the article (2) from the detection area (22), said fifth value being greater than said fourth value.

14. A detection system according to any preceding claim, characterized in that the control unit (24) generates an error message when the magnitude of the received signal or a quantity derived therefrom exceeds a sixth value at least once.

15. A detection system according to any preceding claim, characterized in that the control unit (24) generates an error message when the power or the intensity of the emitted electromagnetic waves exceeds a predetermined value.

16. A detection system according to claims 12-14, characterized in that the second, third, fourth, fifth and sixth values are predetermined values, the second value being greater that the fifth value, and the sixth value being greater than the third value.

17. A detection system according to claims 12-14, characterized in that the second, third, fourth, fifth and sixth values have been determined on the basis of previous values of the received signal, obtained when no article was present in the detection area.

18. A detection system according to any one of the preceding claims, characterized in that the articles are passed through the detection area (22) in succession and with a mutual interspace.

19. A detection system according to claim 18, characterized in that the detection unit (24) performs said reduction or increase of the intensity or energy density of the emitted electromagnetic waves directly after the presence of a new article (2) has been detected.

20. A method for detecting the presence of an article (2) partly formed from a sheet or stacks of sheets in a detection area (22), in which method electromagnetic waves are emitted into the detection area by means of a transmitter unit (14) and the electromagnetic waves emitted by the transmitter unit are received by means of a receiver unit (16), whilst a disturbance of these electromagnetic waves, caused by the article, is detected when the article (2) is located in the detection area (22), wherein the transmitter unit (14) is controlled in such a way that a received signal, which represents the received electromagnetic waves, generated by the receiver unit (16) lies within specified limits, characterized in that, the intensity or energy density of the emitted electromagnetic waves is increased if, upon at least one measurement performed when no article (2) is present in the detection area (22), the magnitude of the received signal or a quantity derived therefrom lies below a second value, whereas the intensity or energy density of the emitted electromagnetic waves is reduced if, upon at least one measurement performed when no article is present in the detection area (22), the magnitude of the received signal or a quantity derived therefrom lies above a third value, said third value being greater than said second value.

21. A method according to claim 20, characterized in that the received signal generated by the receiver unit (16) is adjusted at least substantially to within said limits when no article is located in the detection area (22).

22. A method according to claim 20 or 21, characterized in that the receiver unit (16) is designed for detecting the intensity or energy density of the received electromagnetic waves, whilst the power or the intensity of the electromagnetic waves emitted by the transmitter unit (14) is controlled in such a manner that the received signal lies within said limits.

23. A method according to claim 22, characterized in that said limits are determined in such a manner that the magnitude of the received signal generated by the receiver unit (16) is at least substantially directly proportional to the intensity of the received electromagnetic waves.

24. A method according to any one claims 20-23, characterized in that the transmitter unit (14) is provided with means for emitting light and the receiver unit (16) is provided with means for receiving light.

25. A method according to claim 24, characterized in that the receiver unit (16) is provided with a phototransistor (38), the transmitter unit (14) being controlled in such a manner that the magnitude of the current through the phototransistor (38) is at least substantially directly proportional to the intensity of the light received by the phototransistor (38).

26. A method according to any one of claims 20-25, characterized in that, during an initialization, when no article (2) is located in the detection area (22), the intensity or the power of the emitted electromagnetic waves is adjusted in such a manner that the magnitude of the received signal is at least substantially equal to a predetermined first value.

27. A method according to any one of claims 20-26, characterized in that an article (2) is found to be present in the detection area (22) when the magnitude of the received signal falls below a fourth value as a result of the decrease in the intensity or energy density of the received electromagnetic waves owing to the presence of the article (2) in the detection area (22), whereas the article (2) is found to be no longer present in the detection area (22) when the magnitude of the received signal exceeds a fifth value as a result of the increase in the intensity or energy density of the received waves owing to the disappearance of the article (2) from the detection area (22), said fifth value being greater than said fourth value.

28. A method according to any one of claims 20-27, characterized in that an error message is generated when the magnitude of the received signal exceeds a sixth value at least once.

29. A method according to any one of claim 20-28, characterized in that an error message is generated when the power or the intensity of the emitted electromagnetic waves exceeds a predetermined value.

30. A method according to claims 27 and 28, characterized in that, as second, third, fourth, fifth and sixth values, predetermined values are chosen, with the second value being greater than the fifth value, and the sixth value being greater than the third value, or that the second, third, fourth, fifth and sixth values are determined on the basis of previous values of the received signal, obtained when no article (2) was present in the detection area (22).

31. A method according to claim 27, in which articles are transported through the detection area (22) in succession and with a mutual interspace, characterized in that said increase or reduction of the intensity or energy density of the emitted electromagnetic waves is carried out directly after the presence of a new article (2) has been detected.

**Patentansprüche**

1. Erfassungssystem (20) zur Erfassung des Vorhandenseins eines Gegenstandes (2), welcher teilweise aus einem Blatt oder aus Blätterstapeln gebildet ist, in einem Erfassungsbereich (22), mit einer Sendeeinheit (14) zum Aussenden von elektromagnetischen Wellen in den Erfassungsbereich (22) und einer Empfangseinheit (16) zum Empfangen der von der Sendeeinheit (14) ausgesandten elektromagnetischen Wellen, und zur Erfassung einer Störung dieser elektromagnetischen Wellen, welch von dem Gegenstand (2) bewirkt wird, wenn der Gegenstand in dem Erfassungsbereich (22) angeordnet ist, wobei das System (20) ferner eine Steuereinheit (24) aufweist, welche die Sendeeinheit (14) derart steuert, daß ein empfangenes Signal, welches die empfangenen elektromagnetischen Wellen darstellt, und welches von der Empfangseinheit (16) erzeugt wird, innerhalb spezifizierter Grenzen liegt, und wobei die Empfangseinheit (16) dafür ausgebildet ist, die Intensität oder Energiedichte der empfangenen elecktromagnetischen Wellen zu erfassen, während die Steuereinheit (24) dafür ausgebildet ist, die Stärke oder die Intensität der von der Sendeeinheit (14) ausgesandten elektromagnetischen Wellen zu steuern, dadurch gekennzeichnet, daß die Steuereinheit (24) einen A/D-Umwandler (46) umfaßt, zu welchem die von der Empfangseinheit erzeugten empfangenen Signale geleitet werden, eine Datenverarbeitungseinheit (42), zu welcher von dem A/D-Umwandler (46) abgetastete und digitalisierte, empfangene Signale geleitet werden, und einen D/A-Umwandler (44), welcher von der Datenverarbeitungseinheit (42) erzeugte digitale Steuersignale in analoge Steuersignale umwandelt, welche zu der Sendeeinheit (14) geleitet werden, um die Sendeeinheit (14) zu Steuern, wobei die Steuereinheit (24) die Intensität oder Energiedichte der ausgesandten elektromagnetischen Wellen erhöht, wenn aufgrund wenigstens einer durchgeführten Messung, wenn kein Gegenstand (2) in dem Erfassungsbereich (22) vorhanden ist, die Stärke des empfangenen Signals oder eine davon von der Steuereinheit (24) abgeleitete Größe unterhalb eines zweiten Wertes liegt, und wobei die Steuereinheit (24) die Intensität oder Energiedichte der ausgesandten elektromagnetischen Wellen verringert, wenn aufgrund wenigstens einer durchgeführten Messung, wenn kein Gegenstand in dem Erfassungsbereich (22) vorhanden ist, die Stärke des empfangenen Signals oder eine davon von der Steuereinheit (24) abgeleitete Größe oberhalb eines dritten Wertes liegt, wobei der dritte Wert größer als der zweite Wert ist.

2. Erfassungssystem gemäß Anspruch 1, dadurch gekennzeichnet, daß das von der Empfangseinheit (16) erzeugte empfangene Signal innerhalb der Grenzen liegt, wenn kein Gegenstand (2) in dem Erfassungsbereich (22) angeordnet ist.

3. Erfassungssystem gemäß Anspruch 1 oder 2, dadurch gekennzeichnet, daß die Grenzen derart bestimmt werden, daß die Stärke des von der Empfangseinheit (16) erzeugten, empfangenen Signals wenigstens im wesentlichen direkt proportional zu der Intensität der empfangenen elektromagnetischen Wellen ist.

4. Erfassungssystem gemäß irgendeinem der vorherigen Ansprüche, dadurch gekennzeichnet, daß die Sendeeinheit (14) Einrichtungen (32) zum Aussenden von Licht aufweist.

5. Erfassungssystem gemäß Anspruch 4, dadurch gekennzeichnet, daß die Sendeeinheit (14) eine LED (32) aufweist.

6. Erfassungssystem gemäß Anspruch 4, dadurch gekennzeichnet, daß die Empfangseinheit (16) Einrichtungen (38) zum Empfang von Licht aufweist.

7. Erfassungssystem gemäß Anspruch 6, dadurch gekennzeichnet, daß die Empfangseinheit (16) einen Phototransistor (38) oder eine Photodiode aufweist.

8. Erfassungssystem gemäß den Ansprüchen 3 und 7, dadurch gekennzeichnet, daß die Stärke des Stromes durch den Phototransistor (38) wenigstens im wesentlichen direkt proportional zu der Intensität des von dem Phototransistor (38) empfangenen Lichtes ist.

9. Erfassungssystem gemäß Anspruch 5, dadurch gekennzeichnet, daß die Steuereinheit (24) die Stärke des Stroines durch die LED (32) steuert, uni die Intensität des ausgesandten Lichtes zu regulieren.

10. Erfassungssystem gemäß irgendeinem der vorherigen Ansprüche, dadurch gekennzeichnet, daß die Steuereinheit (24) während einer Initialisierung des Erfassungssystems, wenn kein Gegenstand in dem Erfassungsbereich (22) angeordnet ist, die Intensität oder die Stärke der ausgesandten elektromagnetischen Wellen derart einstellt, daß die Stärke des empfangenen Signals wenigstens im wesentlichen gleich einem vorbestimmten ersten Wert ist.

**11.** Erfassungssystem gemäß irgendeinem vorherigen Anspruch, dadurch gekennzeichnet, daß die Steuereinheit (24) die Intensität oder Energiedichte der ausgesandten elektromagnetischen Wellen um einen vorbestimmten Wert erhöht oder verringert und dies wiederholt, bis die Stärke des empfangenen Signals oder einer davon von der Steuereinheit (24) abgeleiteten Größe zwischen dem zweiten und dritten Wert liegt.

**12.** Erfassungssystem gemäß irgendeinem vorherigen Anspruch dadurch gekennzeichnet, daß die Steuereinheit (24) einen Gegenstand in dem Erfassungsbereich (22) erfaßt, wenn die Stärke des empfangenen Signals unter einen vierten Wert fällt als Folge der Verringerung der Intensität oder Energiedichte der empfangenen elektromagnetischen Wellen aufgrund des Vorhandenseins des Gegenstandes (2) in dein Erfassungsbereich (22).

**13.** Erfassungssystem gemäß Anspruch 12, dadurch gekennzeichnet, daß die Steuereinheit (24) anzeigt, daß ein Gegenstand (2) nicht mehr in dem Erfassungsbereich (22) angeordnet ist, wenn die Stärke des empfangenen Signals einen fünften Wert übersteigt als Folge des Anstiegs der Intensität oder Energiedichte der empfangenen elektromagnetischen Wellen-aufgrund des Verschwindens des Gegensandes (2) aus dem Erfassungsbereich (22), wobei der fünfte Wert größer als der vierte Wert ist.

**14.** Erfassungssystem gemäß irgendeinem vorherigen Anspruch, dadurch gekennzeichnet, daß die Steuereinheit (24) eine Fehlermeldung erzeugt, wenn die Stärke des empfangenen Signals oder einer davon abgeleiteten Größe einen sechsten Wert wenigstens einmal übersteigt.

**15.** Erfassungsstystem gemäß irgendeinem vorherigen Anspruch, dadurch gekennzeichnet, daß die Steuereinheit (24) eine Fehlermeldung erzeugt, wenn die Stärke oder die Intensität der ausgesandten elektromagnetischen Wellen einen vorbestimmten Wert überschreitet.

**16.** Erfassungssystem gemäß den Ansprüchen 12-14, dadurch gekennzeichnet, daß der zweite, dritte, vierte, fünfte und sechste Wert vorbestimmte Werte sind, wobei der zweite Wert größer als der fünfte Wert ist und der sechste Wert größer als der dritte Wert ist.

**17.** Erfassungssystem gemäß den Ansprüchen 12-14, dadurch gekennzeichnet, daß der zweite, dritte, vierte, fünfte und sechste Wert auf der Basis von vorherigen Werten des empfangenen Signals bestimmt werden, welche erhalten wurden, als kein Gegenstand in dem Erfassungsbereich vorhanden war.

**18.** Erfassungssystem gemäß irgendeinem der vorherigen Ansprüche, dadurch gekennzeichnet, daß die Gegenstände hintereinander und mit einem Zwischenraum voneinander durch den Erfassungsbereich geführt werden.

**19.** Erfassungssystem gemäß Anspruch 18, dadurch gekennzeichnet, daß die Erfassungseinheit (24) die Verringerung oder die Erhöhung der Intensität oder Energiedichte der ausgesandten elektromagnetischen Wellen direkt durchführt, nachdem das Vorhandensein eines neuen Gegenstandes (2) erfaßt wurde.

**20.** Verfahren zur Erfassung des Vorhandenseins eines Gegenstandes (2), welcher teilweise aus einem Blatt oder aus Blätterstapeln gebildet ist, in einem Erfassungsbereich (22), wobei bei diesem Verfahren elektromagnetische Wellen in den Erfassungsbereich mittels einer Sendeeinheit (14) ausgesandt werden und die von der Sendeeinheit ausgesandten elektromagnetischen Wellen mittels einer Empfangseinheit (16) empfangen werden, während eine von dem Gegenstand bewirkte Störung dieser elektromagnetischen Wellen erfaßt wird, wenn der Gegenstand (2) in dem Erfassungsbereich (22) angeordnet ist, wobei die Sendeeinheit (14) derart gesteuert wird, daß ein empfangenes Signal, welches die empfangenen elektromagnetischen Wellen darstellt, und welches von der Empfangseinheit (16) erzeugt wird, innerhalb spezifizierter Grenzen liegt, dadurch gekennzeichnet, daß die Intensität oder Energiedichte der ausgesandten elektromagnetischen Wellen erhöht wird, wenn aufgrund wenigstens einer durchgeführten Messung, wenn kein Gegenstand (2) in dem Erfassungsbereich (22) vorhanden ist, die Stärke des empfangenen Signals oder eine davon abgeleitete Größe unterhalb eines zweiten Wertes liegt, und wobei die Intensität oder Energiedichte der ausgesandten elektromagnetischen Wellen verringert wird, wenn aufgrund wenigstens einer durchgeführten Messung wenn kein Gegenstand in dem Erfassungsbereich (22) vorhanden ist, die Stärke des empfangenen Signals oder eine davon abgeleitete Größe oberhalb eines dritten Wertes liegt, wobei der dritte Wert größer als der zweite Wert ist.

**21.** Verfahren gemäß Anspruch 20, dadurch gekennzeichnet, daß das von der Empfangseinheit (16) erzeugte empfangene Signal wenigstens im wesentlichen derart angepaßt wird, daß es innerhalb der Grenzen liegt, wenn kein Gegenstand in dem Erfassungsbereich (22) angeordnet ist.

**22.** Verfahren gemäß Anspruch 20 oder 21 dadurch gekennzeichnet, daß die Empfangseinheit (16) dafür ausgebildet ist, die Intensität oder Energiedichte der empfangenen elektromagnetischen Wellen zu erfassen, während die Stärke oder die Intensität der von der Sendeeinheit (14) augesandten elektromagnetishen Wellen derart gesteuert wird daß das empfangene Signal innerhalb der Grenzen liegt.

**23.** Verfahren gemäß Anspruch 22, dadurch gekennzeichnet, daß die Grenzen derart festgelegt werden, daß die Stärke des von der Empfangseinheit (16) erzeugten empfangenen Signals wenigstens im wesentlichen direkt proportional zu der Intensität der empfangenen elektromagnetischen Wellen ist.

**24.** Verfahren gemäß irgendeinem der Ansprüche 20-23, dadurch gekennzeichnet, daß die Sendeeinheit (14) mit Einrichtungen zum Aussenden von Licht versehen ist, und daß die Empfangseinheit (16) mit Einrichtungen zum Empfangen von Licht ausgestattet ist.

**25.** Verfahren gemäß Anspruch 24, dadurch gekennzeichnet, daß die Empfangseinheit (16) mit einem Phototransistor (38) versehen ist, wobei die Sendeeinheit (14) derart gesteuert wird, daß die Stärke des Stromes durch den Phototransistor (38) wenigstens im wesentlichen direkt proportional zu der Intensität des von dem Phototransistor (38) empfangenen Lichtes ist.

**26.** Verfahren gemäß irgendeinem der Ansprüche 20-25, dadurch gekennzeichnet, daß während einer Initialisierung, wenn kein Gegenstand (2) in dein Erfassungsbereich (22) angeordnet ist, die Intensität oder die Stärke der ausgesandten elektromagnetischen Wellen derart eingestellt wird, daß die Stärke des empfangenen Signals wenigstens im wesentlichen gleich einem vorbestimmten ersten Wert ist.

**27.** Verfahren gemäß irgendeinen der Ansprüche 20-26, dadurch gekennzeichnet, daß ein Gegenstand (2) in dem Erfassungsbereich (22) erfaßt wird, wenn die Stärke des empfangenen Signals unter einen vierten Wert fällt als Folge der Verringerung der Intensität oder Energiedichte der empfangenen elektromagnetischen Wellen aufgrund des Vorhandenseins des Gegenstandes (2) in dem Erfassungsbereich (22), wohingegen erfaßt wird, daß ein Gegenstand (2) nicht mehr in dem Erfassungsbereich (22) angeordnet ist, wenn die Stärke des empfangenen Signals einen fünften Wert übersteigt als Folge des Anstiegs der Intensität oder Energiedichte der empfangenen Wellen aufgrund des Verschwindens des Gegenstandes (2) aus dem Erfassungsbereich (22), wobei der fünfte Wert größer als der vierte Wert ist.

**28.** Verfahren gemäß irgendeinem der Ansprüche 20-27, dadurch gekennzeichnet, daß eine Fehlermeldung erzeugt wird, wenn die Stärke des empfangenen Signals einen sechsten Wert wenigstens einmal überschreitet.

**29.** Verfahren gemäß irgendeinem der Ansprüche 20-28, dadurch gekennzeichnet, daß eine Fehlermeldung erzeugt wird, wenn die Stärke oder die Intensität der ausgesandten elektromagnetischen Wellen einen vorbestimmten Wert überschreitet.

**30.** Verfahren gemäß den Ansprüchen 27 und 28, dadurch gekennzeichnet, daß als zweiter, dritter, vierter, fünfter und sechster Wert vorbestimmte Werte gewählt werden, wobei der zweite Wert größer als der fünfte Wert ist und der sechste Wert größer als der dritte Wert ist, oder daß der zweite, dritte, vierte, fünfte und sechste Wert auf der Basis von vorherigen Werten des empfangenen Signals bestimmt werden, welche erhalten wurden, als kein Gegenstand (2) in dem Erfassungsbereich (22) vorhanden war.

**31.** Verfahren gemäß Anspruch 27, bei welchem Gegenstände hintereinander und mit einem Zwischenraum voneinander durch den Erfassungsbereich (22) transportiert werden, dadurch gekennzeichnet, daß die Erhöhung oder die Verringerung der Intensität oder Energiedichte der ausgesandten elektromagnetischen Wellen direkt durchgeführt wird, nachdem das Vorhandensein eines neuen Gegenstandes (2) erfaßt wurde.

**Revendications**

**1.** Système de détection (20) pour détecter la présence d'un article (2) partiellement formé d'une feuille ou de piles de feuilles, dans une zone de détection (22), comprenant une unité de transmission (14) pour émettre des ondes électromagnétiques dans la zone de détection (22) et une unité de réception (16) pour recevoir les ondes électromagnétiques émises par l'unité de transmission (14) et pour détecter une perturbation de ces ondes électromagnétiques, provoquée par l'article (2) quand l'article est situé dans la zone de détection (22), dans lequel le système (20) comprend de plus une unité de commande (24) qui commande l'unité de transmission (14) de telle manière qu'un signal reçu, qui représente les ondes électromagnétiques reçues, engendré par l'unité de réception (16) se trouve dans des limites spécifiées, et dans lequel l'unité de réception (16) est conçue pour détecter l'intensité ou la densité d'énergie des ondes électromagnétiques reçues, tandis que l'unité de commande (24) est conçue pour commander la puissance ou l'intensité des ondes électromagnétiques émises par l'unité de transmission (14), caractérisé en ce que l'unité de commande (24) comprend un convertisseur A/N (46) auquel les signaux reçus, engendrés par l'unité de réception, sont appliqués, une unité de traitement (42) à laquelle des signaux reçus échantillonnés et numérisés par le convertisseur A/N (46) sont appliqués, et un convertisseur N/A (44) qui convertit les signaux de commande numériques engendrés par le processeur (42) en des signaux de commande analogiques appliqués à l'unité de transmission (14) pour commander l'unité de transmission (14), où l'unité de commande (24) augmente l'intensité ou la densité d'énergie des ondes électromagnétiques émises quand, lors d'au moins une mesure réalisée quand aucun article (2) n'est présent dans la zone de détection (22), la grandeur du signal reçu ou une quantité dérivée de celle-ci par l'unité de commande (24) se trouve en dessous d'une deuxième valeur et où l'unité de commande (24) réduit l'intensité ou la densité d'énergie des ondes électromagnétiques émises quand, lors d'au moins une mesure réalisée quand aucun article n'est présent dans la zone de détection (22), la grandeur du signal reçu ou une quantité dérivée de celle-ci par l'unité de commande (24) se trouve au-dessus d'une troisième valeur, avec la troisième valeur qui est supérieure à la deuxième valeur.

2. Système de détection selon la revendication 1, caractérisé en ce que le signal reçu engendré par l'unité de réception (16) se trouve dans lesdites limites quand aucun article (2) n'est situé dans la zone de détection (22).

3. Système de détection selon la revendication 1 ou 2, caractérisé en ce que lesdites limites sont déterminées de telle manière que la grandeur du signal reçu engendré par l'unité de réception (16) est au moins sensiblement directement proportionnel à l'intensité des ondes électromagnétiques reçues.

4. Système de détection selon l'une quelconque des revendications précédentes, caractérisé en ce que l'unité de transmission (14) comprend des moyens (32) pour émettre de la lumière.

5. Système de détection selon la revendication 4, caractérisé en ce que l'unité de transmission (14) comprend une diode électroluminescente LED (32).

6. Système de détection selon la revendication 4, caractérisé en ce que l'unité de réception (16) comprend des moyens (38) pour recevoir de la lumière.

7. Système de détection selon la revendication 6, caractérisé en ce que l'unité de réception (16) comprend un phototransistor (38) ou une photodiode.

8. Système de détection selon les revendications 3 et 7, caractérisé en ce que la grandeur du courant à travers le phototransistor (38) est au moins sensiblement directement proportionnelle à l'intensité de la lumière reçue par le phototransistor (38).

9. Système de détection selon la revendication 5, caractérisé en ce que l'unité de commande (24) commande la grandeur du courant à travers la diode électroluminescente LED (32) pour réguler l'intensité de la lumière émise.

10. Système de détection selon l'une quelconque des revendicatons précédentes, caractérisé en ce que l'unité de commande (24), durant une initialisation du système de détection, quand aucun article n'est situé dans la zone de détection (22), règle l'intensité ou la puissance des ondes électromagnétiques émises de telle manière que la grandeur du signal reçu soit au moins sensiblement égale à une première valeur prédéterminée.

11. Système de détection selon l'une quelconque des revendications précédentes, caractérisé en ce que l'unité de commande (24) augmente ou réduit l'intensité ou la densité d'énergie des ondes électromagnétiques émises d'une valeur prédéterminée et répète cela jusqu'à ce que la grandeur du signal reçu ou une quantité dérivée de celle-ci par l'unité de commande (24) se trouve entre la deuxième et la troisième valeurs.

12. Système de détection selon l'une quelconque des revendications précédentes, caractérisé en ce que l'unité de commande (24) détecte un article dans la zone de détection (22) quand la grandeur du signal reçu chute en dessous d'une quatrième valeur par suite de la diminution de l'intensité ou de la densité d'énergie des ondes électromagnétiques reçues du fait de la présence de l'article (2) dans la zone de détection (22).

13. Système de détection selon la revendication 12, caractérisé en ce que l'unité de commande (24) indique qu'un article (2) n'est plus situé dans la zone de détection (22) quand la grandeur du signal reçu excède une cinquième valeur par suite de l'augmentation de l'intensité ou de la densité d'énergie des ondes électromagnétiques reçues du fait de la disparition de l'article (2) de la zone de détection (22), ladite cinquième valeur étant supérieure à ladite quatrième valeur.

**14.** Système de détection selon une quelconque revendication précédente,
caractérisé en ce que l'unité de commande (24) engendre un message d'erreurs quand la grandeur du signal reçu ou une quantité dérivée de celle-ci excède une sixième valeur au moins une fois.

**15.** Système de détection selon une quelconque revendication précédente,
caractérisé en ce que l'unité de commande (24) engendre un message d'erreurs quand la puissance ou l'intensité des ondes électromagnétiques émises dépasse une valeur prédéterminée.

**16.** Système de détection selon les revendications 12-14,
caractérisé en ce que les deuxième, troisième, quatrième, cinquième et sixième valeurs sont des valeurs prédéterminées, la deuxième valeur étant supérieure à la cinquième valeur, et la sixième valeur étant supérieure à la troisième valeur.

**17.** Système de détection selon les revendications 12-14,
caractérisé en ce que les deuxième, troisième, quatrième, cinquième et sixième valeurs sont déterminées sur la base de valeurs préalables du signal reçu, obtenues quand aucun article n'était présent dans la zone de détection.

**18.** Système de détection selon l'une quelconque des revendicatons précédentes,
caractérisé en ce que les articles traversent la zone de détection (22) en série et avec un espace mutuel.

**19.** Système de détection selon la revendication 18,
caractérisé en ce que l'unité de détection (24) réalise ladite réduction ou augmentation de l'intensité ou de la densité d'énergie des ondes électromagnétiques émises, directement après que la présence d'un nouvel article (2) a été détectée.

**20.** Procédé pour détecter la présence d'un article (2) partiellement formé d'une feuille ou de piles de feuilles, dans une zone de détection (22), dans lequel procédé des ondes électromagnétiques sont émises dans la zone de détection par l'intermédiaire d'une unité de transmission (14), et les ondes électromagnétiques émises par l'unité de transmission sont reçues par l'intermédiaire d'une unité de réception (16), tandis qu'une perturbation de ces ondes électromagnétiques, provoquée par l'article, est détectée quand l'article (2) est situé dans la zone de détection (22), dans lequel l'unité de transmission (14) est commandée de telle manière qu'un signal reçu, qui représente les ondes électromagnétiques reçues, engendré par l'unité de réception (16) se trouve dans des limites spécifiées,
caractérisé en ce que l'intensité ou la densité d'énergie des ondes électromagnétiques émises est augmentée si, lors d'au moins une mesure réalisée quand aucun article (2) n'est présent dans la zone de détection (22), la grandeur du signal reçu ou une quantité dérivée de celle-ci se trouve en dessous d'une deuxième valeur, tandis que l'intensité ou la densité d'énergie des ondes électromagnétiques émises est réduite si, lors d'au moins une mesure réalisée quand aucun article n'est présent dans la zone de détection (22), la grandeur du signal reçu ou une quantité dérivée de celle-ci se trouve au-dessus d'une troisième valeur, ladite troisième valeur étant supérieure à ladite deuxième valeur.

**21.** Procédé selon la revendication 20,
caractérisé en ce que le signal reçu engendré par l'unité de réception (16) est réglé au moins sensiblement à l'intérieur desdites limites quand aucun article n'est situé dans la zone de détection (22).

**22.** Procédé selon la revendication 20 ou 21,
caractérisé en ce que l'unité de réception (16) est conçue pour détecter l'intensité ou la densité d'énergie des ondes électromagnétiques reçues, tandis que la puissance ou l'intensité des ondes électromagnétiques émises par l'unité de transmission (14) est commandée de telle manière que le signal reçu se trouve dans lesdites limites.

**23.** Procédé selon la revendication 22,
caractérisé en ce, que lesdites limites sont déterminées de telle manière que la grandeur du signal reçu engendré par l'unité de réception (16) soit au moins sensiblement directement proportionnelle à l'intensité des ondes électromagnétiques reçues.

**24.** Procédé selon l'une quelconque des revendications 20-23,
caractérisé en ce que l'unité de transmission (14) est munie de moyens pour émettre de la lumière, et l'unité de réception (16) est munie de moyens pour recevoir de la lumière.

**25.** Procédé selon la revendication 24,
caractérisé en ce que l'unité de réception (16) est munie d'un phototransistor (38), l'unité de transmission (14) étant commandée de telle manière que la grandeur du courant à travers le phototransistor (38) soit au moins sensiblement directement proportionnelle à l'intensité de la lumière reçue par le phototransistor (38).

**26.** Procédé selon l'une quelconque des revendications 20-25, caractérisé en ce que, pendant une initialisation, quand aucun article (2) n'est situé dans la zone de détection (22), l'intensité ou la puissance des ondes électromagnétiques émises est réglée de telle manière que la grandeur du signal reçu soit au moins sensiblement égale à une première valeur prédéterminée.

**27.** Procédé selon l'une quelconque des revendications 20-26, caractérisé en ce qu'un article (2) est présent dans la zone de détection (22) quand la grandeur du signal reçu chute en dessous d'une quatrième valeur par suite de la diminution de l'intensité ou de la densité d'énergie des ondes électromagnétiques reçues du fait de la présence de l'article (2) dans la zone de détection (22), tandis que l'article (2) n'est plus présent dans la zone de détection (22) quand la grandeur du signal reçu excède une cinquième valeur par suite de l'augmentation de l'intensité ou de la densité d'énergie des ondes reçues du fait de la disparition de l'article (2) de la zone de détection (22), ladite cinquième valeur étant supérieure à ladite quatrième valeur.

**28.** Procédé selon l'une quelconque des revendications 20-27, caractérisé en ce qu'un message d'erreurs est engendré quand la grandeur du signal reçu excède une sixième valeur au moins une fois.

**29.** Procédé selon l'une quelconque des revendications 20-28, caractérisé en ce qu'un message d'erreurs est engendré quand la puissance ou l'intensité des ondes électromagnétiques émises dépasse une valeur prédéterminée.

**30.** Procédé selon les revendications 27 et 28, caractérisé en ce que, comme deuxième, troisième, quatrième, cinquième et sixième valeurs, des valeurs prédéterminées sont choisies, avec la deuxième valeur qui est supérieure à la cinquième valeur, et la sixième valeur qui est supérieure à la troisième valeur, ou en ce que les deuxième, troisième, quatrième, cinquième et sixième valeurs sont déterminées sur la base de valeurs précédentes du signal reçu, obtenues quand aucun article (2) n'était présent dans la zone de détection (22).

**31.** Procédé selon la revendication 27, dans lequel des articles sont transportés à travers la zone de détection (22) en série et avec un espace mutuel, caractérisé en ce que ladite augmentation ou réduction de l'intensité ou de la densité d'énergie des ondes électromagnétiques émises est mise en oeuvre directement après que la présence d'un nouvel article (2) a été détectée.

FIG. 1

FIG. 2